# EUROPEAN PATENT SPECIFICATION

(11) **EP 3 969 659 B1**
(45) Date of publication and mention of the grant of the patent: **05.10.2022**
(21) Application number: 20726387.2
(22) Date of filing: 14.05.2020
(51) Int. Cl.: B26F 1/38, B26D 1/00, D21F 9/00, B29C 43/46, B31D 5/02, D21J 5/00, B29C 51/00, B29C 51/44, B29C 51/10, B29C 43/02, B31B 50/59, B29L 31/28, B29K 1/00

(54) **A METHOD FOR PRODUCING CELLULOSE PRODUCTS AND A ROTARY FORMING MOULD SYSTEM**
VERFAHREN ZUR HERSTELLUNG VON CELLULOSEPRODUKTEN UND ROTATIONSFORMWERKZEUG
PROCÉDÉ DE PRODUCTION DE PRODUITS CELLULOSIQUES ET SYSTÈME DE MOULE DE FORMAGE ROTATIF

(30) Priority: 16.05.2019 SE 1950584
(43) Date of publication of application: 23.03.2022
(73) Proprietor: PulPac AB, 421 31 Västra Frölunda (SE)
(72) Inventor: HÖGBLOM, Olle, 412 59 Göteborg (SE); LARSSON, Ove, 426 74 Västra Frölunda (SE); LARSSON, Linus, 411 35 Göteborg (SE); GUIDOTTI, Edward, 412 67 Göteborg (SE)
(74) Representative: Zacco Sweden AB
(86) International application number: PCT/EP2020/063482
(87) International publication number: WO 2020/229608

(56) References cited:
- WO-A1-2017/160218
- US-A1- 2007 137 813
- US-A1- 2010 190 020

## Description

### TECHNICAL FIELD

The present disclosure relates to a method for producing cellulose products from an air-formed cellulose blank structure in a rotary forming mould system. The disclosure further relates to a rotary forming mould system. WO 2017/160218 A1 discloses a prior art method and system for producing discrete three-dimensional cellulose products from an air-formed cellulose blank structure in a forming mould.

### BACKGROUND

Cellulose fibres are often used as raw material for producing or manufacturing products. Products formed of cellulose fibres can be used in many different situations where there is a need for having sustainable products. A wide range of products can be produced from cellulose fibres and a few examples are disposable plates and cups, blank structures and packaging materials.

Forming moulds are commonly used when manufacturing cellulose products from raw materials including cellulose fibres, and traditionally the cellulose products have been produced with wet-forming techniques. A material commonly used for cellulose fibre products is wet moulded pulp. Wet moulded pulp has the advantage of being considered as a sustainable packaging material, since it is produced from biomaterials and can be recycled after use. Consequently, wet moulded pulp has been quickly increasing in popularity for different applications. Wet moulded pulp articles are generally formed by immersing a suction forming mould into a liquid or semi liquid pulp suspension or slurry comprising cellulose fibres, and when suction is applied, a body of pulp is formed with the shape of the desired product by fibre deposition onto the forming mould. With all wet-forming techniques there is a need for drying of the wet moulded product, where the drying is a very time and energy consuming part of the production. The demands on aesthetical, chemical and mechanical properties of cellulose products are increasing, and due to the properties of wet-formed cellulose products, the mechanical strength, flexibility, freedom in material thickness, and chemical properties are limited. It is also difficult in wet-forming processes to control the mechanical properties of the products with high precision.

One development in the field of producing cellulose products is the forming of cellulose fibres without using wet-forming techniques. Instead of forming the cellulose products from a liquid or semi liquid pulp suspension or slurry, an air-formed cellulose blank is used. The air-formed cellulose blank is inserted into a forming mould and during the forming of the cellulose products the cellulose blank is subjected to a high forming pressure and a high forming temperature. The forming systems used for forming cellulose products from air-formed cellulose blank structures are limited in production capacity, since the forming of the cellulose products take place in forming systems with relatively long cycle times. The high pressure needed when forming the cellulose products is limiting the number of products that can be formed in a single pressure forming step.

There is thus a need for an improved method and system for forming cellulose products from an air-formed cellulose blank structure.

### SUMMARY

The invention is defined by the features of independent claims 1 and 3. Optional features are defined in the dependent claims.

An object of the present disclosure is to provide a method for producing cellulose products from an air-formed cellulose blank structure and a rotary forming mould system where the previously mentioned problems are avoided. This object is at least partly achieved by the features of the independent claims. The dependent claims contain further developments of the method for producing cellulose products and the rotary forming mould system.

The disclosure concerns a method for producing discrete three-dimensional cellulose products from an air-formed cellulose blank structure in a rotary forming mould system. The rotary forming mould system comprises at least one first mould part and at least one second mould part, where the at least one first mould part and the at least one second mould part are rotatably arranged in relation to each other. During rotational movements the at least one first mould part is rotatably interacting with the at least one second mould part. The method comprises the steps; providing the air-formed cellulose blank structure, wherein the cellulose blank structure is air-formed from cellulose fibres; transporting the air-formed cellulose blank structure to the rotary forming mould system; feeding the air-formed cellulose blank structure to a position between a first mould part and a second mould part, and heating the air-formed cellulose blank structure to a forming temperature in the range of 100°C to 300°C; forming the three-dimensional cellulose products from the air-formed cellulose blank structure in the rotary forming mould system, by pressing the heated air-formed cellulose blank structure with a forming pressure of at least 1 MPa, preferably 4-20 MPa, between the first mould part and the second mould part, where during forming the first mould part is rotating around a first rotational axis and the second mould part is rotating around a second rotational axis.

Advantages with these features are that the forming of the discrete three-dimensional cellulose products from the air-formed cellulose blank structure can be made with an increased production speed, since the rotational movements of the mould parts are reducing the cycle times compared to traditional forming methods. In the traditional forming methods used, the reciprocating movement establishing the high pressure needed when forming the cellulose products is limiting the number of products that can be formed in a single pressure forming step, and the rotary forming of cellulose products is providing a way to overcome this problem since no mass has to be accelerated and single products can be produced with high speed in continuous rotating movements. With discrete cellulose products is meant that individual or separated products are formed in the process, which is different from the forming of continuous structures, such as webs or sheets of cellulose material. The formed discrete cellulose products are having a three-dimensional shape, which is different from flat or two-dimensional shapes. Examples of three-dimensional products according to the disclosure are disposable cutlery, plates, cups and bowls; three-dimensional packaging structures or packaging inserts; coffee pods; coat-hangers; and meat trays.

According to an aspect of the disclosure, the air-formed cellulose blank structure has a dry basis weight in the range of 200-3000 g/m², preferably 300-3000 g/m², and more preferably 400-3000 g/m². The air-formed cellulose blank structure with these properties are suitable for the forming of the three-dimensional cellulose products. The cellulose blank structure is a relatively thick and fluffy structure compared to traditional wet-laid paper or tissue structures. The bulky cellulose blank structure is compacted during the forming process, and the cellulose fibres in the three-dimensional cellulose products are strongly bonded to each other with hydrogen bonds, providing a stiff compacted three-dimensional product structure.

According to an aspect of the disclosure, the forming pressure is applied to the air-formed cellulose blank structure in a pressure-forming zone established between the first mould part and the second mould part. The pressure-forming zone is formed as a gap and/or force section between the first mould part and the second mould part established during rotational movements of the first mould part and the second mould part in relation to each other. The pressure-forming zone has an extension between the first mould part and the second mould part where the first mould part and/or the second mould part are exerting pressure on the air-formed cellulose blank structure during forming of the three-dimensional cellulose products. The pressure-forming zone is thus a zone formed between the first mould part and the second mould part during the rotational movements of the interacting mould parts.

According to another aspect of the disclosure, the pressure-forming zone has a non-linear configuration in a plane parallel to and extending through the first rotational axis and the second rotational axis at least partly along a first peripheral length of the first mould part and a second peripheral length of the second mould part during rotational movements of the first mould part and the second mould part. The non-linear configuration in the plane is providing three-dimensionally shaped products.

According to an aspect of the disclosure, the method further comprises the step; exerting a highest instantaneous forming pressure on the air-formed cellulose blank structure in a plane parallel to and extending through the first rotational axis and the second rotational axis during rotational movements of the first mould part and the second mould part. The highest instantaneous forming pressure is the highest pressure level exerted on the air-formed cellulose blank structure during the rotary forming of the three-dimensional cellulose products when using for example mould parts with high stiffness.

According to another aspect of the disclosure, the first mould part and/or the second mould part comprises a deformation element arranged to exert the forming pressure on the air-formed cellulose blank structure during forming of the three-dimensional cellulose products. The deformation element is used for evening out the pressure distribution in the forming mould for an efficient forming of the three-dimensional cellulose products.

According to an aspect of the disclosure, the pressure-forming zone is arranged as a closed volume between the first mould part and the second mould part during forming of the three-dimensional cellulose products. The closed volume is securing an efficient forming when using the deformation element and enables more steep deep drawing angles in different directions of the three-dimensional cellulose products.

According to another aspect of the disclosure, the forming pressure is an isostatic forming pressure of at least 1 MPa, preferably 4-20 MPa. The isostatic forming pressure is providing an efficient forming of the three-dimensional cellulose products, for example, when the products have complex three-dimensional shapes.

According to a further aspect of the disclosure, the method further comprises the step; feeding the air-formed cellulose blank structure during forming of the three-dimensional cellulose products between the first mould part and the second mould part with a transportation speed corresponding to the rotational speed of the first mould part and the rotational speed of the second mould part in the pressure-forming zone. The transportation speed corresponding to the rotational speeds of the mould parts is securing an efficient feeding of the air-formed cellulose blank structure with minimized risks for rupturing the air-formed cellulose blank structure.

According to an aspect of the disclosure, the first rotational axis and the second rotational axis are arranged in a parallel relationship to each other. With this relationship between the rotational axes, a compact design of the rotary forming mould system can be achieved.

According to another aspect of the disclosure, the method further comprises the steps; rotating the first mould part around the first rotational axis in a first rotational direction; and rotating the second mould part around the second rotational axis in a second rotational direction, where the first rotational direction is opposite the second rotational direction, or where the first rotational direction is the same as the second rotational direction. With the opposite rotational directions, the mould parts can interact in an efficient way when forming the three-dimensional cellulose products. With the same rotational directions, the rotary forming mould system can be constructed with a compact design.

According to a further aspect of the disclosure, the first mould part comprises a first cutting edge, and/or the second mould part comprises a second cutting edge. During rotational movements of the first mould part and the second mould part the first cutting edge is configured to interact with the second cutting edge, or during rotational movements of the first mould part and the second mould part the first cutting edge is configured to interact with the second mould part, or during rotational movements of the first mould part and the second mould part the second cutting edge is configured to interact with the first mould part. The cutting edges are arranged for removing unwanted residual cellulose fibres from the air-formed cellulose blank structure. The cut residual cellulose fibres may be reused for air-forming cellulose blank structures if desired.

The disclosure further concerns a rotary forming mould system arranged for forming discrete three-dimensional cellulose products from an air-formed cellulose blank structure. The rotary forming mould system comprises at least one first mould part and at least one second mould part, where the at least one first mould part and the at least one second mould part are rotatably arranged in relation to each other. During rotational movements, the at least one first mould part is rotatably interacting with the at least one second mould part. During forming of the three-dimensional cellulose products, the rotary forming mould system is configured to heating the air-formed cellulose blank structure to a forming temperature in the range of 100°C to 300°C, and configured to forming the three-dimensional cellulose products from the air-formed cellulose blank structure in the rotary forming mould system, by pressing the heated air-formed cellulose blank structure with a forming pressure P_{F} of at least 1 MPa, preferably 4-20 MPa, between the first mould part and the second mould part, where during forming the first mould part is arranged to rotate around a first rotational axis and the second mould part is arranged to rotate around a second rotational axis. The forming of the three-dimensional cellulose products from the air-formed cellulose blank structure can be made with an increased production speed in the rotary forming mould system, since the rotational movements of the mould parts are reducing the cycle times compared to traditional forming methods.

According to an aspect of the disclosure, the air-formed cellulose blank structure has a dry basis weight in the range of 200-3000 g/m², preferably 300-3000 g/m², and more preferably 400-3000 g/m², providing suitable properties of the air-formed cellulose blank structure for forming in the forming mould system.

According to an aspect of the disclosure, the rotary forming mould system further comprises a first base structure and a second base structure. The at least one first mould part is arranged on the first base structure, and the at least one second mould part is arranged on the second base structure. The first base structure and the second base structure are rotatably arranged in relation to each other. The base structures are arranged for holding the mould parts during the rotary forming process.

According to another aspect of the disclosure, the forming pressure is applied in a pressure-forming zone established between the first mould part and the second mould part. The pressure-forming zone is configured as a gap and/or force section between the first mould part and the second mould part established during rotational movements of the first mould part and the second mould part in relation to each other. The pressure-forming zone has an extension between the first mould part and the second mould part where the first mould part and/or the second mould part are exerting pressure on the air-formed cellulose blank structure during forming of the three-dimensional cellulose products.

According to another aspect of the disclosure, the pressure-forming zone is configured with a non-linear shape in a plane parallel to and extending through the first rotational axis and the second rotational axis at least partly along a first peripheral length of the first mould part and a second peripheral length of the second mould part during rotational movements of the first mould part and the second mould part.

According to an aspect of the disclosure, the first rotational axis and the second rotational axis are arranged in a parallel relationship to each other.

According to another aspect of the disclosure, the first mould part and the second mould part during are rotational movements configured to exerting a highest instantaneous forming pressure on the air-formed cellulose blank structure in a plane parallel to and extending through the first rotational axis and the second rotational axis. The highest instantaneous forming pressure is the highest pressure level exerted on the air-formed cellulose blank structure during the rotary forming of the three-dimensional cellulose products when using for example mould parts with high stiffness.

According to a further aspect of the disclosure, the first mould part and/or the second mould part comprises a deformation element configured to exerting the forming pressure on the air-formed cellulose blank structure during forming of the three-dimensional cellulose products. The deformation element is used for evening out the pressure distribution in the forming mould for an efficient forming of the three-dimensional cellulose products.

According to an aspect of the disclosure, the pressure-forming zone is arranged as a closed volume between the first mould part and the second mould part during forming of the three-dimensional cellulose products. The closed volume is securing an efficient forming when using the deformation element.

According to another aspect of the disclosure, the forming pressure is an isostatic forming pressure of at least 1 MPa, preferably 4-20 MPa.

According to a further aspect of the disclosure, the first mould part is configured for rotating around the first rotational axis in a first rotational direction, and the second mould part is configured for rotating around the second rotational axis in a second rotational direction. The first rotational direction is opposite the second rotational direction, or the first rotational direction is the same as the second rotational direction.

According to an aspect of the disclosure, the first mould part is configured to be removably attached to the first base structure and/or the second mould part is configured to be removably attached to the second base structure. The base structures can thus be used for different types of mould parts.

According to another aspect of the disclosure, the first mould part comprises a first cutting edge, and/or the second mould part comprises a second cutting edge. During rotational movements of the first mould part and the second mould part the first cutting edge is configured to interact with the second cutting edge, or during rotational movements of the first mould part and the second mould part the first cutting edge is configured to interact with the second mould part, or during rotational movements of the first mould part and the second mould part the second cutting edge is configured to interact with the first mould part. The cutting edges are arranged for removing unwanted residual cellulose fibres from the air-formed cellulose blank structure, and the cut residual cellulose fibres may be reused for air-forming cellulose blank structures if desired.

### BRIEF DESCRIPTION OF DRAWINGS

The disclosure will be described in greater detail in the following, with reference to the attached drawings, in which
- Fig. 1a-b: show schematically, in perspective views a rotary forming mould system and a section of the rotary forming mould system according to the disclosure,
- Fig. 2a-b: show schematically, in side views the rotary forming mould system and a section of the rotary forming mould system according to the disclosure,
- Fig. 3: shows schematically, in a front view a section of the rotary forming mould system according to the disclosure,
- Fig. 4a-c: show schematically, in side views an alternative embodiment of the rotary forming mould system according to the disclosure, and
- Fig. 5: shows schematically, in a side view an alternative embodiment of the forming mould system according to the disclosure.

### DESCRIPTION OF EXAMPLE EMBODIMENTS

Various aspects of the disclosure will hereinafter be described in conjunction with the appended drawings to illustrate and not to limit the disclosure, wherein like designations denote like elements, and variations of the described aspects are not restricted to the specifically shown embodiments, but are applicable on other variations of the disclosure.

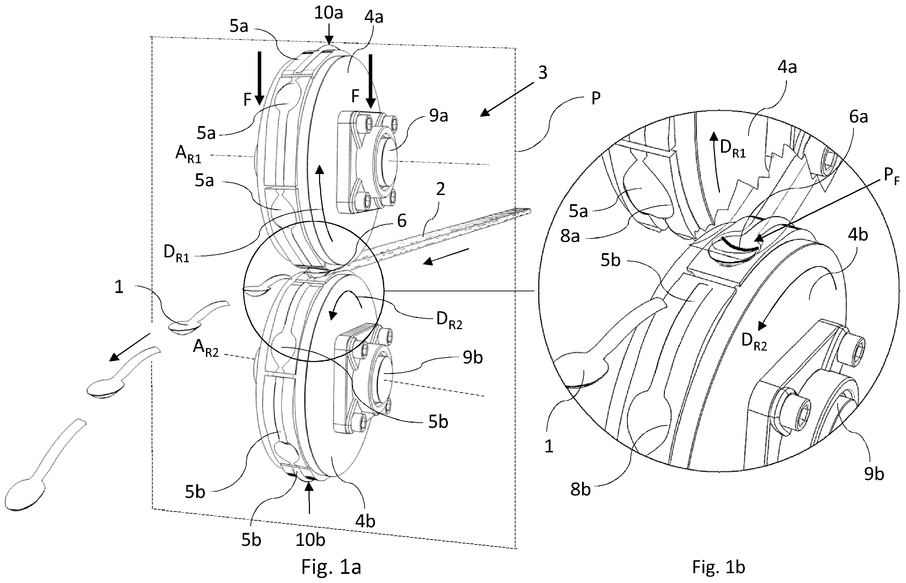

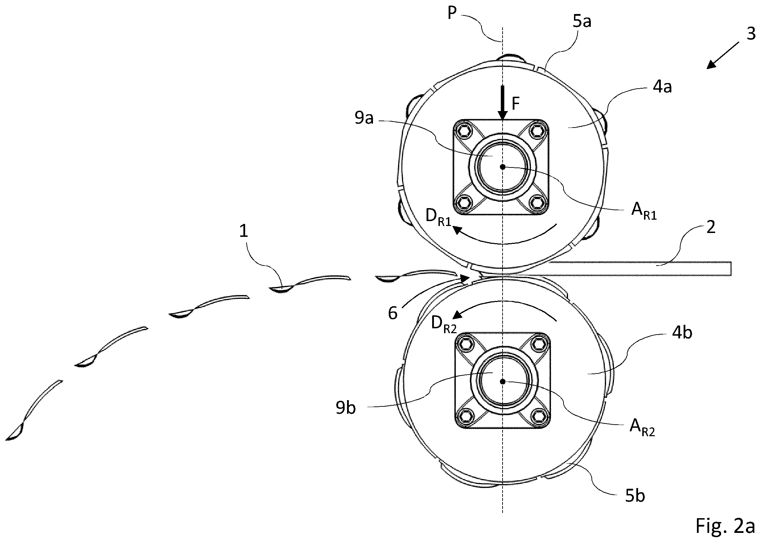

In figures 1a-b and 2a-b, a rotary forming mould system 3 for producing discrete three-dimensional cellulose products 1 from an air-formed cellulose blank structure 2 is schematically shown. The cellulose blank structure 2 may be a pre-formed structure comprising cellulose fibres, where the cellulose fibres are carried and formed to the fibre blank structure 2 by air as carrying medium in an air-forming process.

With discrete cellulose products is meant that individual or separated products are formed in the process, which is different from the forming of continuous structures, such as webs or sheets of cellulose material. The formed discrete cellulose products are having a three-dimensional shape, which is different from flat or two-dimensional shapes. Cellulose structures, such as airlaid webs, tissue webs, boards and other flat cellulose fibre webs are defined as two-dimensional structures, which are different from the discrete three-dimensional cellulose products according to the disclosure. The flat structures are defined as two-dimensional even if they are provided with embossed surfaces or other surface structures. Examples of three-dimensional products according to the disclosure are disposable cutlery, plates, cups and bowls; three-dimensional packaging structures or packaging inserts; coffee pods; coat-hangers; and meat trays. Any type of cellulose product having a well-defined extension in three dimensions may be produced with the method and system according to the disclosure.

With a cellulose blank structure 2 is meant a fibre web structure produced from cellulose fibres. With air-forming of the cellulose blank structure 2 is meant the formation of a cellulose blank structure in a dry-forming process in which cellulose fibres are air-formed to produce the cellulose blank structure 2. When forming the cellulose blank structure 2 in the air-forming process, the cellulose fibres are carried and formed to the fibre blank structure 2 by air as carrying medium. This is different from a normal papermaking process or a traditional wet-forming process, where water is used as carrying medium for the cellulose fibres when forming the paper or fibre structure. In the air-forming process, small amounts of water or other substances may if desired be added to the cellulose fibres in order to change the properties of the cellulose products 1, but air is still used as carrying medium in the forming process. The cellulose blank structure 2 may have a dryness that is mainly corresponding to the ambient humidity in the atmosphere surrounding the dry-formed cellulose blank structure 2. As an alternative, the dryness of the cellulose blank structure 2 may be controlled in order to have a suitable dryness level when forming the cellulose products 1.

The cellulose blank structure 2 may be formed of cellulose fibres in a conventional dry-forming process and be configured in different ways. For example, the cellulose blank structure 2 may have a composition where the fibres are of the same origin or alternatively contain a mix of two or more types of cellulose fibres, depending on the desired properties of the cellulose products 1. The cellulose fibres used in the cellulose blank structure 2 are during the forming of the cellulose products 1 strongly bonded to each other with hydrogen bonds. The cellulose fibres may be mixed with other substances or compounds to a certain amount as will be further described below. With cellulose fibres is meant any type of cellulose fibres, such as natural cellulose fibres or manufactured cellulose fibres.

The cellulose blank structure 2 may have a single-layer or a multi-layer configuration. A cellulose blank structure 2 having a single-layer configuration is referring to a cellulose blank structure that is formed of one layer containing cellulose fibres. A cellulose blank structure 2 having a multi-layer configuration is referring to a cellulose blank structure that is formed of two or more layers containing cellulose fibres, where the layers may have the same or different compositions or configurations. An additional layer comprising cellulose fibres may be arranged as a carrying layer for the cellulose blank structure 2, and the additional layer may have a higher tensile strength than the cellulose blank structure 2. This may be useful when the cellulose blank structure 2 has a composition with a low tensile strength in order to avoid that the cellulose blank structure 2 will break during the forming of the cellulose products 1. The additional layer with a higher tensile strength acts in this way as a supporting structure for the cellulose blank structure 2. The additional layer may for example be a tissue layer containing cellulose fibres, an airlaid structure comprising cellulose fibres, or other suitable layer structures.

The air-formed cellulose blank structure 2 according to the disclosure has suitably a dry basis weight in the range of 200-3000 g/m², preferably 300-3000 g/m², and more preferably 400-3000 g/m². The dry basis weight values described are web-average values, and test have shown that these web-average values are suitable when forming the cellulose products 1. It should be understood that the cellulose blank structure 2 is a relatively thick and fluffy structure compared to traditional wet-laid paper or tissue structures. As an example, tests have shown that the density of the cellulose blank structure 2 when arranged in the forming mould system 3 may be lower than 100 kg/m³, which is providing a bulky structure suitable for forming in the forming mould system 3. It should be understood that the density is depending on the dry-forming process and grade of pre-compression of the cellulose blank structure 2 before the forming of the cellulose products 1 in the forming mould system 3. When determining the density, a pressure of 0.5 kPa is applied to a sample piece of the cellulose blank structure 2. The measured thickness of the cellulose blank structure 2 under load together with the basis weight is used for determining the density. The cellulose blank structure 2 is compacted during the forming process, and the cellulose fibres in the three-dimensional cellulose products 1 are strongly bonded to each other with hydrogen bonds, providing a stiff compacted three-dimensional product structure.

As for example illustrated in figures 1a-b, 2a-b and 3, the rotary forming mould system 3 according to the different embodiments of the disclosure comprises at least one first mould part 5a and at least one second mould part 5b. The at least one first mould part 5a and the at least one second mould part 5b are rotatably arranged in relation to each other, and arranged as discrete mould parts that are interacting with each other during the forming of the three-dimensional cellulose products 1. During rotational movements the at least one first mould part 5a is rotatably interacting with at least one corresponding second mould part 5b for forming the three-dimensional cellulose products 1, and the mould parts are adapted to move in relation to each other for establishing a desired shape of the cellulose products 2 produced in the rotary forming mould system 3. Each first mould part 5a is interacting with a corresponding second mould part 5b. The rotary forming mould system 3 further comprises a rotatably arranged first base structure 4a, and a rotatably arranged second base structure 4b. The least one first mould part 5a is arranged on the first base structure 4a, and the at least one second mould part 5b is arranged on the second base structure 4b. In the embodiment shown in figures 1a-b and 2a-b, the first base structure 4a and the second base structure 4b each comprises a plurality of discrete first mould parts 5a and discrete second mould parts 5b respectively. The first base structure 4a and the second base structure 4b are rotatably arranged in relation to each other, and during rotational movements of the first base structure 4a and the second base structure 4b the first mould parts 5a are rotatably interacting with corresponding second mould parts 5b, as will be further described below.

The first base structure 4a and the second base structure 4b may have any suitable structural configurations for holding the first and second mould parts respectively. The base structures may be formed as rotating constructions of steel or other suitable metals, composite materials, plastic materials or combinations of different materials. The first base structure 4a and the second base structure 4b are each driven by a suitable power source, such as electric motors. Alternatively, the first base structure 4a and the second base structure 4b are driven by the same electric motor through for example a belt drive, chain drive, or gear drive arrangement.

The first mould parts 5a and the second mould parts 5b are attached to the respective base structures with suitable fastening means, such as for example bolts, screws, rivets, or other fastening elements, and the mould parts may be releasably attached for a simple removal of the mould parts when needed. Thus, the at least one first mould part 5a may be configured to be removably attached to the first base structure 4a, and/or the at least one second mould part 5b may be configured to be removably attached to the second base structure 4b. In alternative embodiments, the at least one first mould part 5a and/or the at least one second mould part 5b may suitably be movably arranged in relation to the respective base structures during forming of the cellulose products 1. Movably arranged mould parts may be used when the cellulose products are having complex three-dimensional shapes.

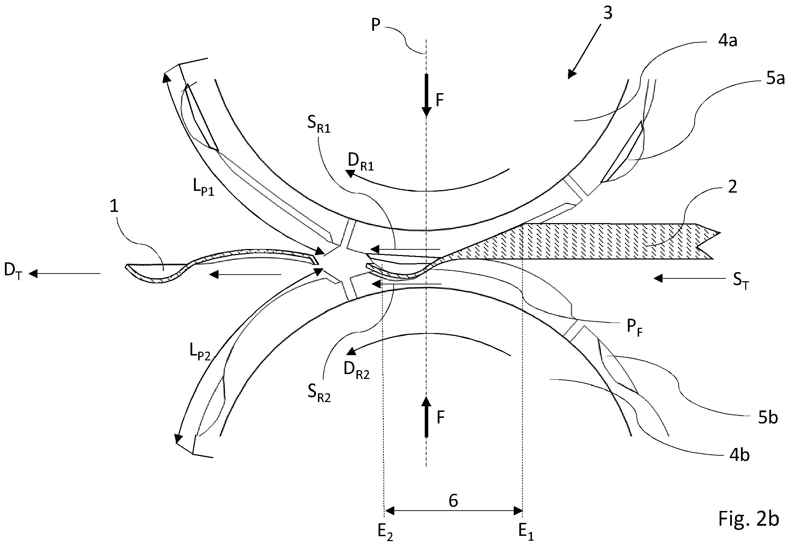

The first mould parts 5a and the second mould parts 5b are arranged to interact with each other during the forming of the cellulose products 1, and are shaped to form the discrete three-dimensional cellulose products during the rotational movements of the first and second mould parts in relation to each other. The first mould parts 5a and the second mould parts 5b thus have mould shapes corresponding to the three-dimensional shape of the cellulose products to be produced. As an example, the first mould parts 5a may be shaped as male moulds and the second mould parts 5b may be shaped as corresponding female moulds, or alternatively the first mould parts 5a may be shaped as female moulds and the second mould parts 5b may be shaped as corresponding male moulds. The first mould parts 5a and the second mould parts 5b may each have both male and female mould sections, depending on the shape of the three-dimensional cellulose products 1 to be produced, as schematically illustrated in figure 2b, where a three-dimensional disposable cellulosic spoon is exemplified. Corresponding male and female mould sections of the respective mould parts are interacting with each other during the rotational movements of the mould parts. In this way, a three-dimensional shape of the cellulose products 1 is established between the mould parts.

The first base structure 4a and the second base structure 4b may be formed as forming wheels having essentially circular peripheral shapes, and the first mould parts 5a and the second mould parts 5b are arranged on the outer peripheries of the respective base structures, as illustrated in figures 1a-b and 2a-b. The respective mould parts may have curved shapes to match the base structures, and the curved shapes are enabling the rotating interaction between the first mould parts 5a and the second mould parts 5b. The base structures may have other designs and configurations if desired.

The first mould part 5a is configured for rotating around a first rotational axis A_{R1} in a first rotational direction D_{R1}, and the second mould part 5b is configured for rotating around the second rotational axis A_{R2} in a second rotational direction D_{R2}. As illustrated in figures 1a-b and 2b, the first rotational direction D_{R1} is opposite the second rotational direction D_{R2}. The first rotational axis A_{R1} and the second rotational axis A_{R2} are suitably arranged in a parallel relationship to each other. If desired, the first rotational axis A_{R1} and the second rotational axis A_{R2} may instead be arranged in a non-parallel relationship to each other.

A first axle structure 9a may be arranged for rotating the first base structure 4a and the first mould parts 5a around the first rotational axis A_{R1} in the first rotational direction D_{R1}. The first axle structure 9a may be attached to the first base structure 4a with suitable fastening means, and the first axle structure 9a may be journally attached to a frame structure or similar arrangement via suitable bearings. A second axle structure 9b may be arranged for rotating the second base structure 4b and the second mould parts 5b around the second rotational axis A_{R2} in the second rotational direction D_{R2}. The second axle structure 9b may be attached to the second base structure 4b with suitable fastening means, and the second axle structure 9a may be journally attached to the frame structure or similar arrangement via suitable bearings.

As described above, during rotational movements of the first mould parts 5a and second mould parts 5b, the first mould parts 5a are rotatably interacting with corresponding second mould parts 5b. Each first mould part 5a on the first base structure 4a has a corresponding second mould part 5b on the second base structure 4b, where the corresponding mould parts are cooperating when forming the cellulose products 1. When rotating around the respective rotational axes, the first mould parts 5a meet and interact with the corresponding second mould parts 5b, and the cellulose products 1 are formed in a space formed between the first mould parts 5a and the second mould parts 5b.

During forming of the three-dimensional cellulose products 1, the rotary forming mould system 3 is configured to heating the cellulose blank structure 2 to a forming temperature in the range of 100°C to 300°C with suitable heating means. The cellulose blank structure 2 may for example be pre-heated in a heating unit, exposed to hot air or steam, or alternatively the mould parts may be heated. The rotary forming mould system 3 is further configured to forming the cellulose products 1 from the cellulose blank structure 2 in the rotary forming mould system 3, by pressing the heated cellulose blank structure 2 with a forming pressure P_{F} of at least 1 MPa, preferably 4-20 MPa, between the first mould part 5a and the second mould part 5b. During forming, the first mould part 5a is rotating around the first rotational axis A_{R1} and the second mould part 5b is rotating around the second rotational axis A_{R2}. The forming temperature of the cellulose blank structure 2 may for example be measured with suitable temperature sensors when the cellulose blank structure 2 is formed between the mould parts, such as for example temperature sensors integrated in the mould parts, or thermochromic temperature sensors arranged in connection to or in the cellulose blank structure 2. Other suitable sensors may for example be IR sensors measuring the temperature of the cellulose blank structure 2 directly after forming between the mould parts.

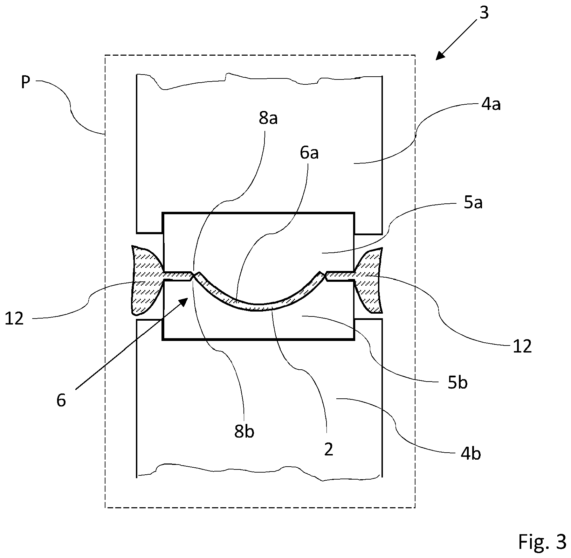

The forming pressure P_{F} is applied to the cellulose blank structure 2 in the space formed between the first mould part 5a and the second mould part 5b. More specifically, the forming pressure P_{F} is applied in a pressure-forming zone 6 established between the first mould part 5a and the second mould part 5b, where the pressure-forming zone 6 is configured as a gap and/or force section between the first mould part 5a and the second mould part 5b. The gap and/or force section is established during rotational movements of the first mould part 5a and the second mould part 5b in relation to each other. With a gap section is meant that a gap is established between the mould parts in the pressure-forming zone 6, where the cellulose products 1 are formed in the gap from the cellulose blank structure 2. The amount of supplied cellulose fibres into the gap determines the obtained forming pressure in the gap. The first rotational axis A_{R1} is with this configuration arranged at a fixed distance from the second rotational axis A_{R2}. A force section between the mould parts is referring to situations where there is no initial gap between the mould parts, and where a force F is exerted between the mould parts is used for forming the cellulose products, as schematically illustrated in figures 1a, 2a-b. This may be the case if the respective base structures 4a, 4b are spring-loaded and arranged to exert pressure onto the respective mould parts, wherein the mould parts are pressed in a direction towards each other during the forming process. The first rotational axis A_{R1} is with this configuration arranged to move in relation to the second rotational axis A_{R2}. A forming space is established between the mould parts when the cellulose blank structure 2 is arranged between the mould parts, since the mould parts through the spring-loaded configuration are allowed to move in relation to each other. The pressure-forming zone 6 is defined to have an extension between the first mould part 5a and the second mould part 5b where the first mould part 5a and/or the second mould part 5b are exerting pressure on the cellulose blank structure 2 during forming of the cellulose products 1. The pressure-forming zone 6 may vary for example depending on the type and design of mould parts used, the thickness and configuration of the cellulose blank structure 2, and the properties of the cellulose fibres in the cellulose blank structure 2. The pressure-forming zone 6 is illustrated in figures 2b and 3, and as shown in figure 2a, the pressure-forming zone 6 starts in a tangential direction D_{T} where the mould parts interact with each other at a first zone end E₁ where the cellulose blank structure 2 enters the gap between the first mould part 5a and the second mould part 5b, and where the first mould part 5a and/or the second mould part 5b start exerting pressure on the cellulose blank structure 2. When the mould parts are exerting pressure on the cellulose blank structure 2, the cellulose blank structure 2 is being deformed and compacted between the mould parts. The pressure-forming zone 6 ends in the tangential direction D_{T} at a second zone end E₂ where the cellulose blank structure 2 exits the gap between the first mould part 5a and the second mould part 5b, and where the first mould part 5a and/or the second mould part 5b are no longer exerting pressure on the cellulose blank structure 2. When the mould parts are no longer exerting pressure on the cellulose blank structure 2, the cellulose blank structure 2 has been formed into the cellulose products 1. The extension of the pressure-forming zone 6 in the tangential direction D_{T}, and the positions of the first zone end E₁ and the second zone end E₂ may vary during the rotational movements of the mould parts depending on the configuration of the mould parts.

The first mould parts 5a have a first extension along a first outer periphery 10a of the first mould parts 5a with a first peripheral length L_{P1}. The second mould parts 5b have a second extension along a second outer periphery 10b of the second mould parts 5b with a second peripheral length L_{P2}.

As illustrated in figures 1a-b, 2a-b and 3, the pressure-forming zone 6 may be configured with a non-linear shape 6a in a plane P parallel to and including the first rotational axis A_{R1} and the second rotational axis A_{R2} at least partly along the first peripheral length L_{P1} of the first mould part 5a and the second peripheral length L_{P2} of the second mould part 5b during rotational movements of the first mould part 5a and the second mould part 5b. The non-linear shape 6a of the pressure-forming zone is shown in figures 1b and 3. The plane P is thus extending through the first rotational axis A_{R1} and the second rotational axis A_{R2}. During rotational movements, the mould parts are thus moving through the plane P, and the non-linear configuration with the non-linear shape 6a of the pressure-forming zone 6 in the plane P may vary during the rotational movements of the mould parts. The non-linear configuration may have any varying shapes, such as for example varying between convex and concave shapes. The non-linear shape 6a of the pressure-forming zone 6 is used for producing three-dimensionally shaped cellulose products 1. The pressure-forming zone 6, may have a three-dimensional shape along at least one or more parts or sections of the respective peripheries of the mould parts, where the non-linear configuration of the pressure-forming zone 6 in the plane P is used for producing three-dimensional cellulose products 1 having non-planar shapes. The extension and the shape of the pressure-forming zone 6 in the plane P during movements of the mould parts may thus vary along the peripheral lengths of the mould parts depending on the shape of the cellulose products 1. It should be understood that the tangential direction D_{T} referred to above is perpendicular to or essentially perpendicular to the plane P.

When producing the three-dimensional cellulose products 1 in the rotary forming mould system 3, the cellulose blank structure 2 air-formed from cellulose fibres is provided. The forming of the cellulose blank structure 2 may take place in an air-forming unit or similar arrangement, and if desired the cellulose blank structure 2 may be arranged in rolls or sheets before being transported to the rotary forming mould system 3. If desired, the air-forming may take place in direct connection to the rotary forming mould system 3 and thus the air-forming unit may be arranged in line with the rotary forming mould system 3. The cellulose blank structure 2 is then being transported to the rotary forming mould system 3, and the cellulose blank structure 2 is fed to a position between a first mould part 5a and a second mould part 5b. The transportation of the cellulose blank structure 2 in the rotary forming mould system 3 may be accomplished through the interaction between the cellulose blank structure 2 and the mould parts. The cellulose blank structure 2 is heated to a forming temperature in the range of 100°C to 300°C, and the heating may be arranged in connection to the mould parts, for example in a heating unit or through a stream of hot air or steam. Another alternative is to use heated mould parts for heating the cellulose blank structure 2. The cellulose products 1 are formed from the cellulose blank structure 2 in the rotary forming mould system 3, by pressing the heated cellulose blank structure 2 with a forming pressure P_{F} of at least 1 MPa, preferably 4-20 MPa, in the pressure-forming zone 6 established between the first mould part 5a and the second mould part 5b. During forming, the first mould part 5a is rotating around the first rotational axis A_{R1} and the second mould part 5b is rotating around the second rotational axis A_{R2}. As described above, the pressure-forming zone 6 is formed as a gap and/or force section between the first mould part 5a and the second mould part 5b established during rotational movements of the first mould part 5a and the second mould part 5b in relation to each other.

A highest instantaneous forming pressure may be exerted, depending on the design of the mould parts, on the cellulose blank structure 2 in the pressure-forming zone 6 in the plane P parallel to and extending through the first rotational axis A_{R1} and the second rotational axis A_{R2} during rotational movements of the first mould part 5a and the second mould part 5b, depending on the configuration of the mould parts. When using stiff mould parts, the highest instantaneous forming pressure is normally exerted in the plane P.

In alternative embodiments, the first mould part 5a and/or the second mould part 5b comprises a deformation element 7 arranged to exert the forming pressure P_{F} on the cellulose blank structure 2 in the pressure-forming zone 6 during forming of the cellulose products 1. When using a deformation element 7, the pressure-forming zone 6 may have, depending on the construction of the mould parts, a different extension than the ones described above. When using the deformation element 7, the pressure-forming zone 6 may be arranged as a closed volume between the first mould part 5a and the second mould part 5b during forming of the cellulose products 1. The respective mould parts may be configured with walls or similar structural elements that are closing a forming volume between the mould parts during the forming process. In this way, the deformation element 7 is exerting an isostatic forming pressure on the cellulose blank structure in the closed volume between the mould parts. The forming pressure P_{F} is thus in this embodiment an isostatic forming pressure of at least 1 MPa, preferably 4-20 MPa.

The deformation element 7 may be attached to the first mould part 5a and/or the second mould part 5b with suitable attachment means, such as for example glue or mechanical fastening members. During the forming, the deformation element 7 is deformed to exert a pressure on the cellulose blank structure 2 and through the deformation an even pressure distribution is achieved, even if the cellulose products 1 are having complex three-dimensional shapes or if the cellulose blank structure 2 is having a varied thickness.

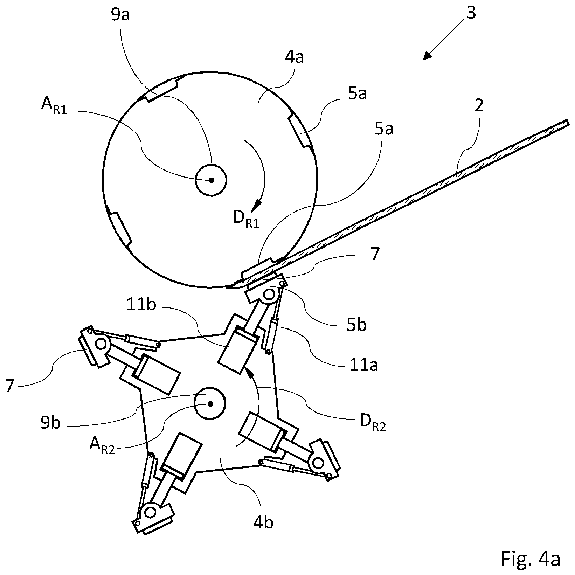

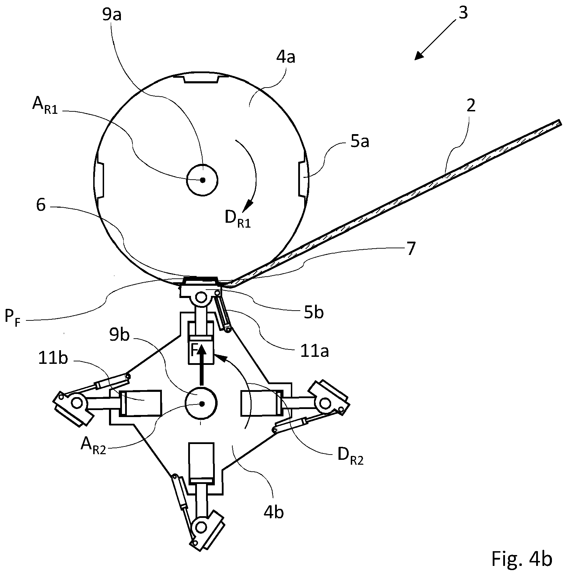

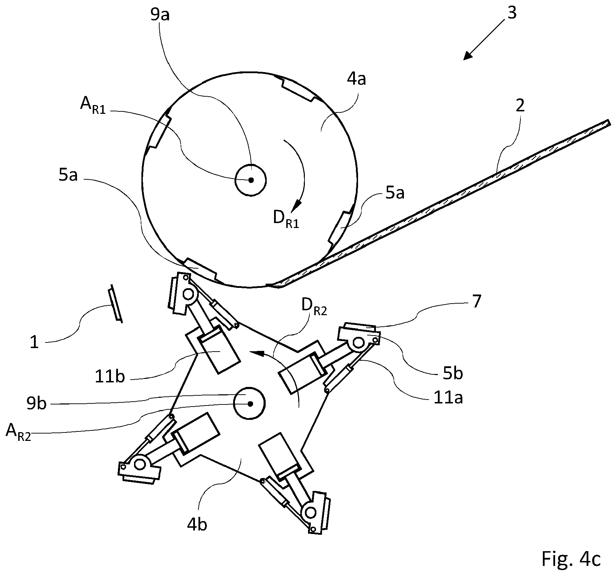

In the embodiments illustrated in figure 4a-c, the first mould part 5a is arranged as a female mould part, and the second mould part 5b is arranged as a male mould part with a deformation element 7, where the deformation element 7 is arranged to exert the forming pressure P_{F} on the cellulose blank structure 2. In figure 4a, the cellulose blank structure 2 is arranged between the first mould part 5a and the second mould part 5b. In figure 4b, the cellulose product 1 is formed between the first mould part 5a and the second mould part 5b. In figure 4c, the formed cellulose product 1 is ejected from the mould parts. As illustrated in figures 4a-c, the second mould part 5b is movably arranged in relation to the second base structure 4b, and a first actuator 11a and a second actuator 11b, or similar arrangements, are used for moving the second mould part 5b. The first actuator 11a is used for a tilting movement of the second mould part 5b in relation to the base structure 4b, and the second actuator 11b is used for an inwards-outwards movement of the second mould part 5b in relation to the base structure 4b. If an isostatic forming pressure is used, the first mould part 5a and the second mould part 5b may be arranged to close a volume between the mould parts during forming of the cellulose products 1, for example in the position illustrated in figure 4b. With this configuration of the rotary forming mould system, the pressure-forming zone 6 is established between the first mould part 5a and the second mould part 5b during forming of the cellulose products 1. The first mould part and/or the second mould part may if suitable be provided with cutting edges.

In the different embodiments described above, the deformation element 7 is being deformed during the forming process, and the deformation element 7 is during forming of the cellulose products 1 arranged to exert a forming pressure P_{F} on the cellulose blank structure 2. To exert a required forming pressure P_{F} on the cellulose blank structure 2, the deformation element 7 is made of a material that can be deformed when a force or pressure is applied. For example, the deformation element 7 can be made of an elastic material capable of recovering size and shape after deformation. The deformation element 7 may further be made of a material with suitable properties that is withstanding the high forming pressure and temperature levels used when forming the cellulose products 1.

During the forming process, the deformation element 7 is deformed to exert the forming pressure P_{F} on the cellulose blank structure 2. Through the deformation an even pressure distribution can be achieved, even if the cellulose products 1 are having complex three-dimensional shapes with cutouts, apertures and holes, or if the cellulose blank structure 2 used is having varying density, thickness, or grammage levels.

Certain elastic or deformable materials have fluid-like properties when being exposed to high pressure levels. If the deformation element 7 is made of such a material, an even pressure distribution can be achieved in the forming process, where the pressure exerted on the cellulose blank structure 2 from the deformation element 7 is equal or essentially equal in all directions between the mould parts. When the deformation element 7 during pressure is in its fluid-like state, a uniform fluid-like pressure distribution is achieved. The forming pressure is with such a material thus applied to the cellulose blank structure 2 from all directions, and the deformation element 7 is in this way during the forming of the cellulose products 1 exerting the isostatic forming pressure on the cellulose blank structure 2. The isostatic forming pressure from the deformation element 7 is establishing a uniform pressure in all directions on the cellulose blank structure 2. The isostatic forming pressure is providing an efficient forming process of the cellulose products 1, and the cellulose products 1 can be produced with high quality even if having complex shapes.

The deformation element 7 may be made of a suitable structure of elastomeric material, where the material has the ability to establish a uniform pressure on the cellulose blank structure 2 during the forming process. As an example, the deformation element 7 is made of a massive structure or an essentially massive structure of silicone rubber, polyurethane, polychloroprene, or rubber with a hardness in the range 20-90 Shore A. Other materials for the deformation element 7 may for example be suitable gel materials, liquid crystal elastomers, and MR fluids. The deformation element 7 may also be configured as a thin membrane with a fluid that is exerting the forming pressure on the cellulose blank structure 2.

In the different embodiments described, as schematically illustrated in figure 2b, the cellulose blank structure 2 is fed during forming of the cellulose products 1 between the first mould part 5a and the second mould part 5b with a transportation speed S_{T} corresponding to the peripheral rotational speed S_{R1} of the first mould part 5a and the peripheral rotational speed S_{R2} of the second mould part 5b in the pressure-forming zone 6.

The first rotational axis A_{R1} and the second rotational axis A_{R2} may be arranged in a parallel relationship to each other, as schematically illustrated in figure 1a. The first mould part 5a is rotating around the first rotational axis A_{R1} in a first rotational direction D_{R1}; and the second mould part 5b is rotating around the second rotational axis A_{R2} in a second rotational direction D_{R2}. As illustrated with arrows in figure 1b, the first rotational direction D_{R1} is opposite the second rotational direction D_{R2}.

The first mould part 5a may comprise a first cutting edge 8a, and/or the second mould part 5b a second cutting edge 8b, as schematically illustrated in figure 1a. The first cutting edge 8a and the second cutting edge 8b may have a shape or contour corresponding to the shape or contour of the cellulose products 1 to be produced. The first cutting edge 8a may be configured to interact with the second cutting edge 8b for removing parts of the cellulose blank structure 2 that are not art of the formed cellulose products 1. The first cutting edge 8a is arranged in an interacting relationship to the second cutting edge 8b during rotational movements of the first mould part 5a and the second mould part 5b. The cutting edges are arranged for removing unwanted residual cellulose fibres 12 from the cellulose blank structure, as schematically illustrated in figure 3, and the cut residual cellulose fibres 12 may be reused for forming new cellulose blank structures if desired. In an alternative configuration, only one of the mould parts may be arranged with a cutting edge, where the cutting edge may be arranged to interact with a part of the other mould part for cutting residual cellulose fibres from the cellulose blank structure. The cutting edge may have a shape or contour corresponding to the shape or contour of the cellulose products 1 to be produced. Thus, during rotational movements of the first mould part 5a and the second mould part 5b the first cutting edge 8a is configured to interact with the second mould part 5b, or alternatively during rotational movements of the first mould part 5a and the second mould part 5b the second cutting edge 8b is configured to interact with the first mould part 5a.

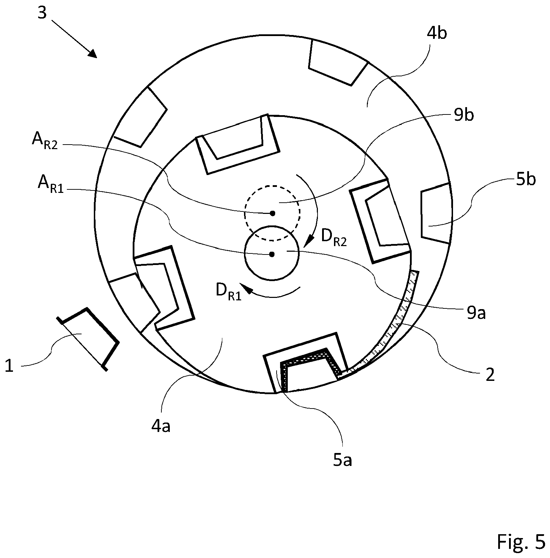

In an alternative embodiment illustrated in figure 5, the rotary forming mould system 3 for producing cellulose products 1 from a cellulose blank structure 2 is constructed with a compact and efficient design. The first base structure 4a is arranged inside the second base structure 4b. With this arrangement of the base structures, the first mould part 5a is configured for rotating around a first rotational axis A_{R1} in a first rotational direction D_{R1}, and the second mould part 5b is configured for rotating around the second rotational axis A_{R2} in a second rotational direction D_{R2}. As illustrated in figure 5, the first rotational direction D_{R1} is the same as the second rotational direction D_{R2}. The first rotational axis A_{R1} and the second rotational axis A_{R2} are suitably arranged in a parallel relationship to each other. If desired, the first rotational axis A_{R1} and the second rotational axis A_{R2} may instead be arranged in a non-parallel relationship to each other. In this embodiment, the forming process is similar to the ones described in the embodiments above but with different relative movements of the mould parts. The mould parts may have the same configurations and functions as described in the different embodiments above.

In the embodiment shown in figure 5, a first axle structure 9a may be arranged for rotating the first base structure 4a and the first mould parts 5a around the first rotational axis A_{R1} in the first rotational direction D_{R1}. The first axle structure 9a may be attached to the first base structure 4a with suitable fastening means, and the first axle structure 9a may be journally attached to a frame structure or similar arrangement via suitable bearings. A second axle structure 9b may be arranged for rotating the second base structure 4b and the second mould parts 5b around the second rotational axis A_{R2} in the second rotational direction D_{R2}. The second axle structure 9b may be attached to the second base structure 4b with suitable fastening means, and the second axle structure 9a may be journally attached to the frame structure or similar arrangement via suitable bearings. As illustrated in figure 5, the number of first mould parts 5a may differ from the number of second mould parts 5b.

It should be understood that the rotary forming mould system 3 may comprise one or more further mould parts, where the one or more further mould parts each may be arranged to rotate around a rotational axis. The rotational axes of the one or more further mould parts may be arranged in a parallel or non-parallel relationship in relation to the first rotational axis and/or the second rotational axis. As a non-limiting example, the forming mould system may comprise at least one third mould part in addition to the at least one first mould part and the at least one second mould part. The at least one third mould part may be rotatably arranged in relation to the at least one first mould part and the at least one second mould part. During rotational movements, the at least one first mould part, the at least one second mould part, and the at least one at least one third mould part are rotatably interacting with each other. In a further non-limiting example, the forming mould system may in a similar way comprise at least one fourth mould part in addition to the at least one first mould part, the at least one second mould part, and the at least one third mould part.

The cellulose blank structure 2 may comprise one or more additives that are altering the mechanical, hydrophobic, and/or oleophobic properties of the cellulose products 1. Tests have shown that if the cellulose blank structure 2 contains at least 70% of cellulose fibres, desired mechanical properties of the cellulose products 1 can be achieved. In order to achieve the desired properties of the formed cellulose products 1, the cellulose fibres should be strongly bonded to each other through fibril aggregation in a way so that the resulting cellulose products 1 will have good mechanical properties. The additives used may therefore not impact the bonding of the cellulose fibres during the forming process to a high extent.

As a non-limiting example, the cellulose blank structure may 2 have a material composition of 70-99.9% dry wt cellulose fibres and 0.1-30% dry wt of the one or more additives. In another embodiment, the cellulose blank structure 2 may have a material composition of 80-99.9% dry wt cellulose fibres and 0.1-20% dry wt of the one or more additives. In a further embodiment, the cellulose blank structure 2 may have a material composition of 90-99.9% dry wt cellulose fibres and 0.1-10% dry wt of the one or more additives. Depending on the amount of cellulose fibres and additives used in the cellulose blank structure 2, the cellulose products 1 can have different properties.

The one or more additives of the cellulose blank structure 2 may be, as a non-limiting example, starch compounds, rosin compounds, butanetetracarboxylic acid, gelatin compounds, alkyl ketene dimer (AKD), Alkenyl Succinic Anhydride (ASA), and/or flourocarbons. These additives are commonly used in the forming of cellulose products and are therefore not described in detail. Starch compounds, gelatin compounds, butanetetracarboxylic acid, and fluorocarbons may for example be used for altering the mechanical properties, such as strength or stiffness, of the cellulose product. Rosin compounds, alkyl ketene dimer (AKD), Alkenyl Succinic Anhydride (ASA), and fluorocarbons may for example be used for altering the hydrophobic properties of the cellulose products. Fluorocarbons may for example be used also for altering the oleophobic properties of the cellulose products 1. The one or more additives of the cellulose blank structure 2 may be added to the cellulose blank structure 2 before forming the cellulose products 1, for example when dry-forming the cellulose blank structure 2.

It will be appreciated that the above description is merely exemplary in nature and is not intended to limit the present disclosure, its application or uses. While specific examples have been described in the specification and illustrated in the drawings, it will be understood by those of ordinary skill in the art that various changes may be made and equivalents may be substituted for elements thereof without departing from the scope of the present disclosure as defined in the claims. Furthermore, modifications may be made to adapt a particular situation or material to the teachings of the present disclosure without departing from the essential scope thereof. Therefore, it is intended that the present disclosure not be limited to the particular examples illustrated by the drawings and described in the specification as the best mode presently contemplated for carrying out the teachings of the present disclosure, but that the scope of the present disclosure will include any embodiments falling within the foregoing description and the appended claims. Reference signs mentioned in the claims should not be seen as limiting the extent of the matter protected by the claims, and their sole function is to make claims easier to understand.

### REFERENCE SIGNS

- 1:: Cellulose product
- 2:: Cellulose blank structure
- 3:: Rotary forming mould system
- 4a:: First base structure
- 4b:: Second base structure
- 5a:: First mould part
- 5b:: Second mould part
- 6:: Pressure-forming zone
- 6a:: Non-linear shape
- 7:: Deformation element
- 8a:: First cutting edge
- 8b:: Second cutting edge
- 9a:: First axle structure
- 9b:: Second axle structure
- 10a:: First outer periphery
- 10b:: Second outer periphery
- 11a:: First actuator
- 11b:: Second actuator
- 12:: Residual cellulose fibres

## Claims

1. A method for producing discrete three-dimensional cellulose products (1) from an air-formed cellulose blank structure (2) in a rotary forming mould system (3), wherein the rotary forming mould system (3) comprises at least one first mould part (5a) and at least one second mould part (5b), wherein the at least one first mould part (5a) and the at least one second mould part (5b) are rotatably arranged in relation to each other, wherein during rotational movements the at least one first mould part (5a) is rotatably interacting with the at least one second mould part (5b), wherein the method comprises the steps;
providing the air-formed cellulose blank structure (2), wherein the cellulose blank structure (2) is air-formed from cellulose fibres;
transporting the air-formed cellulose blank structure (2) to the rotary forming mould system (3);
feeding the air-formed cellulose blank structure (2) to a position between a first mould part (5a) and a second mould part (5b), and heating the air-formed cellulose blank structure (2) to a forming temperature in the range of 100°C to 300°C;
forming the three-dimensional cellulose products (1) from the air-formed cellulose blank structure (2) in the rotary forming mould system (3), by pressing the heated air-formed cellulose blank structure (2) with a forming pressure (P_{F}) of at least 1 MPa, preferably 4-20 MPa, between the first mould part (5a) and the second mould part (5b), wherein during forming the first mould part (5a) is rotating around a first rotational axis (A_{R1}) and the second mould part (5b) is rotating around a second rotational axis (A_{R2}).

2. A method according to claim 1,
wherein the forming pressure (P_{F}) is applied to the air-formed cellulose blank structure (2) in a pressure-forming zone (6) established between the first mould part (5a) and the second mould part (5b), wherein the pressure-forming zone (6) is formed as a gap and/or force section between the first mould part (5a) and the second mould part (5b) established during rotational movements of the first mould part (5a) and the second mould part (5b) in relation to each other, wherein the pressure-forming zone (6) has an extension between the first mould part (5a) and the second mould part (5b) where the first mould part (5a) and/or the second mould part (5b) are exerting pressure on the air-formed cellulose blank structure (2) during forming of the three-dimensional cellulose products (1).

3. A rotary forming mould system (3) arranged for forming discrete three-dimensional cellulose products (1) from an air-formed cellulose blank structure (2),
wherein the rotary forming mould system (3) comprises at least one first mould part (5a) and at least one second mould part (5b), wherein the at least one first mould part (5a) and the at least one second mould part (5b) are rotatably arranged in relation to each other, wherein during rotational movements the at least one first mould part (5a) is rotatably interacting with the at least one second mould part (5b),
wherein during forming of the three-dimensional cellulose products (1) the rotary forming mould system (3) is configured to heating the air-formed cellulose blank structure (2) to a forming temperature in the range of 100°C to 300°C, and configured to forming the three-dimensional cellulose products (1) from the air-formed cellulose blank structure (2) in the rotary forming mould system (3), by pressing the heated air-formed cellulose blank structure (2) with a forming pressure (P_{F}) of at least 1 MPa, preferably 4-20 MPa, between the first mould part (5a) and the second mould part (5b),
wherein during forming the first mould part (5a) is arranged to rotate around a first rotational axis (A_{R1}) and the second mould part (5b) is arranged to rotate around a second rotational axis (A_{R2}).

4. A rotary forming mould system (3) according to claim 3,
wherein the air-formed cellulose blank structure (2) has a dry basis weight in the range of 200-3000 g/m², preferably 300-3000 g/m², and more preferably 400-3000 g/m².

5. A rotary forming mould system (3) according to claim 3 or 4,
wherein the rotary forming mould system (3) further comprises a first base structure (4a) and a second base structure (4b), wherein the at least one first mould part (5a) is arranged on the first base structure (4a) and the at least one second mould part (5b) is arranged on the second base structure (4b), wherein the first base structure (4a) and the second base structure (4b) are rotatably arranged in relation to each other.

6. A rotary forming mould system (3) according to any of claims 3-5,
wherein the forming pressure (P_{F}) is applied in a pressure-forming zone (6) established between the first mould part (5a) and the second mould part (5b), wherein the pressure-forming zone (6) is configured as a gap and/or force section between the first mould part (5a) and the second mould part (5b) established during rotational movements of the first mould part (5a) and the second mould part (5b) in relation to each other, wherein the pressure-forming zone (6) has an extension between the first mould part (5a) and the second mould part (5b) where the first mould part (5a) and/or the second mould part (5b) are exerting pressure on the air-formed cellulose blank structure (2) during forming of the three-dimensional cellulose products (1).

7. A rotary forming mould system (3) according to claim 6,
wherein the pressure-forming zone (6) is configured with a non-linear shape (6a) in a plane (P) parallel to and extending through the first rotational axis (A_{R1}) and the second rotational axis (A_{R2}) at least partly along a first peripheral length (L_{P1}) of the first mould part (5a) and a second peripheral length (L_{P2}) of the second mould part (5b) during rotational movements of the first mould part (5a) and the second mould part (5b).

8. A rotary forming mould system (3) according to any of claims 3-7,
wherein the first rotational axis (A_{R1}) and the second rotational axis (A_{R2}) are arranged in a parallel relationship to each other.

9. A rotary forming mould system (3) according to any of claims 3-8,
wherein the first mould part (5a) and the second mould part (5b) during rotational movements are configured to exerting a highest instantaneous forming pressure on the air-formed cellulose blank structure (2) in a plane (P) parallel to and extending through the first rotational axis (A_{R1}) and the second rotational axis (A_{R2}) .

10. A rotary forming mould system (3) according to any of claims 3-9,
wherein the first mould part (5a) and/or the second mould part (5b) comprises a deformation element (7) configured to exerting the forming pressure (P_{F}) on the air-formed cellulose blank structure (2) during forming of the three-dimensional cellulose products (1).

11. A rotary forming mould system (3) according to claim 6 or 7, and claim 10,
wherein the pressure-forming zone (6) is arranged as a closed volume between the first mould part (5a) and the second mould part (5b) during forming of the three-dimensional cellulose products (1).

12. A rotary forming mould system (3) according to claim 10 or 11,
wherein the forming pressure (P_{F}) is an isostatic forming pressure of at least 1 MPa, preferably 4-20 MPa.

13. A rotary forming mould system (3) according to any of claims 3-12,
wherein the first mould part (5a) is configured for rotating around the first rotational axis (A_{R1}) in a first rotational direction (D_{R1}), and the second mould part (5b) is configured for rotating around the second rotational axis (A_{R2}) in a second rotational direction (D_{R2}); wherein the first rotational direction (D_{R1}) is opposite the second rotational direction (D_{R2}), or wherein the first rotational direction (D_{R1}) is the same as the second rotational direction (D_{R2}).

14. A rotary forming mould system (3) according to any of claims 3-13,
wherein the first mould part (5a) is configured to be removably attached to the first base structure (4a) and/or the second mould part (5b) is configured to be removably attached to the second base structure (4b).

15. A rotary forming mould system (3) according to any of claims 3-14,
wherein the first mould part (5a) comprises a first cutting edge (8a), and/or the second mould part (5b) comprises a second cutting edge (8b), wherein during rotational movements of the first mould part (5a) and the second mould part (5b) the first cutting edge (8a) is configured to interact with the second cutting edge (8b), or wherein during rotational movements of the first mould part (5a) and the second mould part (5b) the first cutting edge (8a) is configured to interact with the second mould part (5b), or wherein during rotational movements of the first mould part (5a) and the second mould part (5b) the second cutting edge (8b) is configured to interact with the first mould part (5a).

## Patentansprüche

1. Verfahren zur Herstellung von getrennten dreidimensionalen Celluloseprodukten (1) aus einer luftgebildeten Celluloserohlingsstruktur (2) in einem Rotationsformungsformsystem (3), wobei das Rotationsformungsformsystem (3) mindestens einen ersten Formteil (5a) und mindestens einen zweiten Formteil (5b) umfasst, wobei der mindestens eine erste Formteil (5a) und der mindestens eine zweite Formteil (5b) im Verhältnis zueinander drehbar angeordnet sind, wobei der mindestens eine erste Formteil (5a) während Drehbewegungen mit dem mindestens einen zweiten Formteil (5b) drehbar zusammenwirkt, wobei das Verfahren die folgenden Schritte umfasst;
Bereitstellen der luftgebildeten Celluloserohlingsstruktur (2), wobei die Celluloserohlingsstruktur (2) aus Cellulosefasern luftgebildet ist;
Transportieren der luftgebildeten Celluloserohlingsstruktur (2) zum Rotationsformungsformsystem (3);
Zuführen der luftgebildeten Celluloserohlingsstruktur (2) zu einer Position zwischen einem ersten Formteil (5a) und einem zweiten Formteil (5b) und Aufwärmen der luftgebildeten Celluloserohlingsstruktur (2) auf eine Formungstemperatur im Bereich von 100° C bis 300° C;
Formen der dreidimensionalen Celluloseprodukte (1) aus der luftgebildeten Celluloserohlingsstruktur (2) im Rotationsformungsformsystem (3) durch Pressen der aufgewärmten luftgebildeten Celluloserohlingsstruktur (2) mit einem Formungsdruck (P_{F}) von mindestens 1 MPa, vorzugsweise 4-20 MPa, zwischen dem ersten Formteil (5a) und dem zweiten Formteil (5b), wobei der erste Formteil (5a) während der Formung um eine erste Drehachse (A_{R1}) herum dreht und der zweite Formteil (5b) um eine zweite Drehachse (A_{R2}) herum dreht.

2. Verfahren nach Anspruch 1,
wobei der Formungsdruck (P_{F}) auf die luftgebildete Celluloserohlingsstruktur (2) in einer zwischen dem ersten Formteil (5a) und dem zweiten Formteil (5b) erstellten Druckformungszone (6) aufgetragen wird, wobei die Druckformungszone (6) als ein Zwischenraum und/oder ein Kraftabschnitt zwischen dem ersten Formteil (5a) und dem zweiten Formteil (5b), erstellt während Drehbewegungen des ersten Formteils (5a) und des zweiten Formteils (5b) im Verhältnis zueinander, gebildet wird, wobei die Druckformungszone (6) eine Verlängerung zwischen dem ersten Formteil (5a) und dem zweiten Formteil (5b) aufweist, wo der erste Formteil (5a) und/oder der zweite Formteil (5b) während der Formung der dreidimensionalen Celluloseprodukte (1) Druck auf die luftgebildete Celluloserohlingsstruktur (2) ausüben.

3. Rotationsformungsformsystem (3) eingerichtet zur Formung von getrennten dreidimensionalen Celluloseprodukten (1) aus einer luftgebildeten Celluloserohlingsstruktur (2),
wobei das Rotationsformungsformsystem (3) mindestens einen ersten Formteil (5a) und mindestens einen zweiten Formteil (5b) umfasst, wobei der mindestens eine erste Formteil (5a) und der mindestens eine zweite Formteil (5b) im Verhältnis zueinander drehbar angeordnet sind, wobei der mindestens eine erste Formteil (5a) während Drehbewegungen mit dem mindestens einen zweiten Formteil (5b) drehbar zusammenwirkt,
wobei das Rotationsformungsformsystem (3) während der Formung der dreidimensionalen Celluloseprodukte (1) dafür ausgelegt ist, die luftgebildete Celluloserohlingsstruktur (2) auf eine Formungstemperatur im Bereich von 100° C bis 300° C aufzuwärmen und dafür ausgelegt ist, die dreidimensionalen Celluloseprodukte (1) aus der luftgebildeten Celluloserohlingsstruktur (2) im Rotationsformungsformsystem (3) zu formen durch Pressen der aufgewärmten luftgebildeten Celluloserohlingsstruktur (2) mit einem Formungsdruck (P_{F}) von mindestens 1 MPa, vorzugsweise 4-20 MPa, zwischen dem ersten Formteil (5a) und dem zweiten Formteil (5b),
wobei der erste Formteil (5a) während der Formung dafür ausgelegt ist, um eine erste Drehachse (A_{R1}) herum zu drehen und der zweite Formteil (5b) dafür ausgelegt ist, um eine zweite Drehachse (A_{R2}) herum zu drehen.

4. Rotationsformungsformsystem (3) nach Anspruch 3,
wobei die luftgebildete Celluloserohlingsstruktur (2) ein Trockenbasisgewicht im Bereich von 200-3000 g/m², vorzugsweise 300-3000 g/m² und eher bevorzugt 400-3000 g/m² aufweist.

5. Rotationsformungsformsystem (3) nach Anspruch 3 oder 4,
wobei das Rotationsformungsformsystem (3) weiter eine erste Basisstruktur (4a) und eine zweite Basisstruktur (4b) aufweist, wobei der mindestens eine erste Formteil (5a) auf der ersten Basisstruktur (4a) angeordnet ist und der mindestens eine zweite Formteil (5b) auf der zweiten Basisstruktur (4b) angeordnet ist, wobei die erste Basisstruktur (4a) und die zweite Basisstruktur (4b) im Verhältnis zueinander drehbar angeordnet sind.

6. Rotationsformungsformsystem (3) nach einem der Ansprüche 3-5,
wobei der Formungsdruck (P_{F}) in einer zwischen dem ersten Formteil (5a) und dem zweiten Formteil (5b) erstellten Druckformungszone (6) aufgetragen wird, wobei die Druckformungszone (6) als ein Zwischenraum und/oder ein Kraftabschnitt zwischen dem ersten Formteil (5a) und dem zweiten Formteil (5b), erstellt während Drehbewegungen des ersten Formteils (5a) und des zweiten Formteils (5b) im Verhältnis zueinander, ausgelegt ist, wobei die Druckformungszone (6) eine Verlängerung zwischen dem ersten Formteil (5a) und dem zweiten Formteil (5b) aufweist, wo der erste Formteil (5a) und/oder der zweite Formteil (5b) während der Formung der dreidimensionalen Celluloseprodukte (1) Druck auf die luftgebildete Celluloserohlingsstruktur (2) ausüben.

7. Rotationsformungsformsystem (3) nach Anspruch 6,
wobei die Druckformungszone (6) mit einer nichtlinearen Gestaltung (6a) in einer Ebene (P) parallel zur und sich erstreckend durch die erste Drehachse (A_{R1}) und die zweite Drehachse (A_{R2}) zumindest teilweise entlang einer ersten peripheren Länge (L_{P1}) des ersten Formteils (5a) und einer zweiten peripheren Länge (L_{P2}) des zweiten Formteils (5b) während Drehbewegungen des ersten Formteils (5a) und des zweiten Formteils (5b) ausgelegt ist.

8. Rotationsformungsformsystem (3) nach einem der Ansprüche 3-7,
wobei die erste Drehachse (A_{R1}) und die zweite Drehachse (A_{R2}) zueinander parallel angeordnet sind.

9. Rotationsformungsformsystem (3) nach einem der Ansprüche 3-8,
wobei der erste Formteil (5a) und der zweite Formteil (5b) während Drehbewegungen dafür ausgelegt sind, einen höchsten momentanen Formungsdruck auf die luftgebildete Celluloserohlingsstruktur (2) in einer Ebene (P) parallel zur und sich erstreckend durch die erste Drehachse (A_{R1}) und die zweite Drehachse (A_{R2}) auszuüben.

10. Rotationsformungsformsystem (3) nach einem der Ansprüche 3-9,
wobei der erste Formteil (5a) und/oder der zweite Formteil (5b) ein Verformungselement (7) umfasst, das dafür ausgelegt ist, den Formungsdruck (P_{F}) auf die luftgebildete Celluloserohlingsstruktur (2) während der Formung der dreidimensionalen Celluloseprodukte (1) auszuüben.

11. Rotationsformungsformsystem (3) nach Anspruch 6 oder 7 und Anspruch 10,
wobei die Druckformungszone (6) als ein geschlossenes Volumen zwischen dem ersten Formteil (5a) und dem zweiten Formteil (5b) während der Formung der dreidimensionalen Celluloseprodukte (1) eingerichtet ist.

12. Rotationsformungsformsystem (3) nach Anspruch 10 oder 11,
wobei der Formungsdruck (P_{F}) ein isostatischer Formungsdruck von mindestens 1 MPa, bevorzugt 4-20 MPa ist.

13. Rotationsformungsformsystem (3) nach einem der Ansprüche 3-12, wobei der erste Formteil (5a) dafür ausgelegt ist, um die erste Drehachse (A_{R1}) in einer ersten Drehrichtung (D_{R1}) herum zu drehen, und der zweite Formteil (5b) dafür ausgelegt ist, um die zweite Drehachse (A_{R2}) in einer zweiten Drehrichtung (D_{R2}) herum zu drehen; wobei die erste Drehrichtung (D_{R1}) der zweiten Drehrichtung (D_{R2}) entgegengesetzt ist, oder wobei die erste Drehrichtung (D_{R1}) die gleiche wie die zweite Drehrichtung (D_{R2}) ist.

14. Rotationsformungsformsystem (3) nach einem der Ansprüche 3-13, wobei der erste Formteil (5a) dafür ausgelegt ist, an der ersten Basisstruktur (4a) lösbar befestigt zu werden und/oder der zweite Formteil (5b) dafür ausgelegt ist, an der zweiten Basisstruktur (4b) lösbar befestigt zu werden.

15. Rotationsformungsformsystem (3) nach einem der Ansprüche 3-14, wobei der erste Formteil (5a) eine erste Schneidkante (8a) aufweist und/oder der zweite Formteil (5b) eine zweite Schneidkante (8b) aufweist, wobei die erste Schneidkante (8a) während Drehbewegungen des ersten Formteils (5a) und des zweiten Formteils (5b) dafür ausgelegt ist, mit der zweiten Schneidkante (8b) zusammenzuwirken, oder wobei die erste Schneidkante (8a) während Drehbewegungen des ersten Formteils (5a) und des zweiten Formteils (5b) dafür ausgelegt ist, mit dem zweiten Formteil (5b) zusammenzuwirken, oder wobei die zweite Schneidkante (8b) während Drehbewegungen des ersten Formteils (5a) und des zweiten Formteils (5b) dafür ausgelegt ist, mit dem ersten Formteil (5a) zusammenzuwirken.

## Revendications

1. Procédé de production de produits cellulosiques tridimensionnels discrets (1) à partir d'une structure d'ébauche en cellulose formée à l'air (2) dans un système de moule de formage rotatif (3), dans lequel le système de moule de formage rotatif (3) comprend au moins une première partie de moule (5a) et au moins une deuxième partie de moule (5b), dans lequel l'au moins une première partie de moule (5a) et l'au moins une deuxième partie de moule (5b) sont agencées de manière rotative l'une par rapport à l'autre, dans lequel, lors de mouvements de rotation, l'au moins une première partie de moule (5a) interagit de manière rotative avec l'au moins une deuxième partie de moule (5b), dans lequel le procédé comprend les étapes consistant à ;
fournir la structure d'ébauche en cellulose formée à l'air (2), la structure d'ébauche en cellulose (2) étant formée à l'air à partir de fibres de cellulose ; transporter la structure d'ébauche en cellulose formée à l'air (2) vers le système de moule de formage rotatif (3) ;
amener la structure d'ébauche en cellulose formée à l'air (2) à une position entre une première partie de moule (5a) et une deuxième partie de moule (5b), et chauffer la structure d'ébauche en cellulose formée à l'air (2) à une température de formation dans la plage de 100°C à 300°C ;
former les produits cellulosiques tridimensionnels (1) à partir de la structure d'ébauche en cellulose formée à l'air (2) dans le système de moule de formage rotatif (3), en pressant la structure d'ébauche en cellulose formée à l'air chauffée (2) avec une pression de formage (P_{F}) d'au moins 1 MPa, de préférence de 4 à 20 MPa, entre la première partie de moule (5a) et la deuxième partie de moule (5b), pendant le formage, la première partie de moule (5a) tournant autour d'un premier axe de rotation (A_{R1}) et la deuxième partie de moule (5b) tournant autour d'un deuxième axe de rotation (A_{R2}).

2. Procédé selon la revendication 1,
dans lequel la pression de formation (P_{F}) est appliquée à la structure d'ébauche en cellulose formée à l'air (2) dans une zone de formation de pression (6) établie entre la première partie de moule (5a) et la deuxième partie de moule (5b), dans lequel la zone de formation de pression (6) est formée comme un espace et / ou une section de force entre la première partie de moule (5a) et la deuxième partie de moule (5b) établie lors des mouvements de rotation de la première partie de moule (5a) et de la deuxième partie de moule (5b) l'une par rapport à l'autre, dans lequel la zone de formation de pression (6) présente une extension entre la première partie de moule (5a) et la deuxième partie de moule (5b), la première partie de moule (5a) et / ou la deuxième partie de moule (5b) exerçant une pression sur la structure d'ébauche de cellulose formée à l'air (2) pendant la formation des produits cellulosiques tridimensionnels (1).

3. Système de moule de formage rotatif (3) agencé pour former des produits cellulosiques tridimensionnels discrets (1) à partir d'une structure d'ébauche en cellulose formée à l'air (2),
dans lequel le système de moule de formage rotatif (3) comprend au moins une première partie de moule (5a) et au moins une deuxième partie de moule (5b), dans lequel l'au moins une première partie de moule (5a) et l'au moins une deuxième partie de moule (5b) sont agencées de manière rotative l'une par rapport à l'autre, dans lequel, lors de mouvements de rotation, l'au moins une première partie de moule (5a) interagit de manière rotative avec l'au moins une deuxième partie de moule (5b),
dans lequel, pendant le formage des produits cellulosiques tridimensionnels (1), le système de moule de formage rotatif (3) est configuré pour chauffer la structure d'ébauche en cellulose formée à l'air (2) à une température de formage dans la plage de 100°C à 300°C, et configuré pour former les produits cellulosiques tridimensionnels (1) à partir de la structure d'ébauche en cellulose formée à l'air (2) dans le système de moule de formage rotatif (3), en pressant la structure d'ébauche de cellulose formée à l'air chauffée (2) avec un pression de formage (P_{F}) d'au moins 1 MPa, de préférence de 4 à 20 MPa, entre la première partie de moule (5a) et la deuxième partie de moule (5b), dans lequel, pendant le formage, la première partie de moule (5a) est agencée pour tourner autour d'un premier axe de rotation (A_{R1}) et la deuxième partie de moule (5b) est agencée pour tourner autour d'un deuxième axe de rotation (A_{R2}).

4. Système de moule de formage rotatif (3) selon la revendication 3,
dans lequel la structure d'ébauche en cellulose formée à l'air (2) présente un poids de base sec dans la plage de 200 à 3000 g/m², de préférence de 300 à 3000 g/m², et plus préférablement de 400 à 3000 g/m².

5. Système de moule de formage rotatif (3) selon la revendication 3 ou 4, dans lequel le système de moule de formage rotatif (3) comprend en outre une première structure de base (4a) et une deuxième structure de base (4b), dans lequel l'au moins une première partie de moule (5a) est arrangée sur la première structure de base (4a), et l'au moins une deuxième partie de moule (5b) est arrangée sur la deuxième structure de base (4b), dans lequel la première structure de base (4a) et la deuxième structure de base (4b) sont agencées de manière rotative l'une par rapport à l'autre.

6. Système de moule de formage rotatif (3) selon l'une quelconque des revendications 3 à 5,
dans lequel la pression de formation (P_{F}) est appliquée dans une zone de formation de pression (6) établie entre la première partie de moule (5a) et la deuxième partie de moule (5b), dans lequel la zone de formation de pression (6) est configurée comme un espace et / ou une section de force entre la première partie de moule (5a) et la deuxième partie de moule (5b) établie lors des mouvements de rotation de la première partie de moule (5a) et de la deuxième partie de moule (5b) l'une par rapport à l'autre, dans lequel la zone de formation de pression (6) présente une extension entre la première partie de moule (5a) et la deuxième partie de moule (5b), la première partie de moule (5a) et / ou la deuxième partie de moule (5b) exerçant une pression sur la structure d'ébauche de cellulose formée à l'air (2) pendant la formation des produits cellulosiques tridimensionnels (1).

7. Système de moule de formage rotatif (3) selon la revendication 6,
dans lequel la zone de formation de pression (6) est configurée avec une forme non linéaire (6a) dans un plan (P) parallèle au et s'étendant à travers le premier axe de rotation (A_{R1}) et le deuxième axe de rotation (A_{R2}) au moins partiellement le long une première longueur périphérique (L_{P1}) de la première partie de moule (5a) et une deuxième longueur périphérique (L_{P2}) de la deuxième partie de moule (5b) lors des mouvements de rotation de la première partie de moule (5a) et de la deuxième partie de moule (5b).

8. Système de moule de formage rotatif (3) selon l'une quelconque des revendications 3 à 7,
dans lequel le premier axe de rotation (Am) (A_{R1}) et le deuxième axe de rotation (A_{R2}) sont agencés parallèlement l'un à l'autre.

9. Système de moule de formage rotatif (3) selon l'une quelconque des revendications 3 à 8,
dans lequel la première partie de moule (5a) et la deuxième partie de moule (5b) pendant les mouvements de rotation sont configurées pour exercer une pression de formage instantanée la plus élevée sur la structure d'ébauche en cellulose formée à l'air (2) dans un plan (P) parallèle au et s'étendant à travers le premier axe de rotation (A_{R1}) et le deuxième axe de rotation (A_{R2}).

10. Système de moule de formage rotatif (3) selon l'une quelconque des revendications 3 à 9,
dans lequel la première partie de moule (5a) et / ou la deuxième partie de moule (5b) comprend un élément de déformation (7) configuré pour exercer la pression de formage (P_{F}) sur la structure d'ébauche en cellulose formée à l'air (2) pendant le formage des produits cellulosiques tridimensionnels (1).

11. Système de moule de formage rotatif (3) selon la revendication 6 ou 7, et la revendication 10,
dans lequel la zone de formage sous pression (6) est agencée sous la forme d'un volume fermé situé entre la première partie de moule (5a) et la deuxième partie de moule (5b) lors du formage des produits cellulosiques tridimensionnels (1).

12. Système de moule de formage rotatif (3) selon la revendication 10 ou 11, dans lequel la pression de formage (P_{F}) est une pression de formage isostatique d'au moins 1 MPa, de préférence de 4 à 20 MPa.

13. Système de moule de formage rotatif (3) selon l'une quelconque des revendications 3 à 12,
dans lequel la première partie de moule (5a) est configurée pour tourner autour du premier axe de rotation (A_{R1}) dans un premier sens de rotation (D_{R1}), et la deuxième partie de moule (5b) est configurée pour tourner autour du deuxième axe de rotation (A_{R2}) dans un deuxième sens de rotation (D_{R2}) ; dans lequel le premier sens de rotation (D_{R1}) est opposé au second sens de rotation (D_{R2}), ou dans lequel le premier sens de rotation (D_{R1}) est le même que le second sens de rotation (D_{R2}).

14. Système de moule de formage rotatif (3) selon l'une quelconque des revendications 3 à 13,
dans lequel la première partie de moule (5a) est configurée pour être fixée de manière amovible à la première structure de base (4a) et / ou la deuxième partie de moule (5b) est configurée pour être fixée de manière amovible à la deuxième structure de base (4b).

15. Système de moule de formage rotatif (3) selon l'une quelconque des revendications 3 à 14,
dans lequel la première partie de moule (5a) comprend une première arête de coupe (8a), et / ou la deuxième partie de moule (5b) comprend une deuxième arête de coupe (8b), dans lequel lors des mouvements de rotation de la première partie de moule (5a) et du deuxième partie de moule (5b), la première arête de coupe (8a) est configurée pour interagir avec la deuxième arête de coupe (8b), ou dans lequel pendant les mouvements de rotation de la première partie de moule (5a) et de la deuxième partie de moule (5b), la première arête de coupe (8a) est configurée pour interagir avec la deuxième partie de moule (5b), ou dans lequel pendant les mouvements de rotation de la première partie de moule (5a) et de la deuxième partie de moule (5b), la deuxième arête de coupe (8b) est configurée pour interagir avec la première partie de moule (5a).
